# EUROPEAN PATENT SPECIFICATION

(11) **EP 1 993 693 B1**
(45) Date of publication and mention of the grant of the patent: **09.10.2013**
(21) Application number: 07736523.7
(22) Date of filing: 12.02.2007
(51) Int. Cl.: C12C 13/00, B01D 19/02

(54) **A METHOD AND DEVICE FOR SUBSIDING/ CONTROLLING FOAMING WITHOUT USING ANTIFOAMING AGENT /DEFOAMER EVOLVING DURING INDUSTRIAL PROCESS**
VERFAHREN UND VORRICHTUNG ZUR UNTERDRÜCKUNG/BEKÄMPFUNG VON SCHÄUMEN OHNE VERWENDUNG VON ANTISCHAUMMITTEL/ENTSCHÄUMER BEI EINEM TECHNISCHEN VERFAHREN
PROCÉDÉ ET DISPOSITIF SERVANT À RÉDUIRE/RÉGULER LA FORMATION DE MOUSSE SANS L'AIDE D'UN AGENT ANTIMOUSSE/DÉMOUSSEUR LORS D'UN PROCESSUS INDUSTRIEL

(30) Priority: 14.02.2006 IN MU02072006
(43) Date of publication of application: 26.11.2008
(73) Proprietor: Chavan, Nitin Sureshrao, Pune 411 004 (IN)
(72) Inventor: Chavan, Nitin Sureshrao, Pune 411 004 (IN)
(74) Representative: Bertsch, Florian Oliver
(86) International application number: PCT/IN2007/000058
(87) International publication number: WO 2007/099550

(56) References cited:
- WO-A-2005/051089
- CA-A1- 2 313 891
- DD-A1- 221 085
- DE-A1- 3 012 198
- DE-A1- 3 443 652
- GB-A- 1 309 173
- JP-A- 53 106 972
- JP-A- 59 111 914
- JP-A- 2001 145 803
- KR-A- 20040 022 607

## Description

### FIELD OF INVENTION:

This invention relates to a device for subsiding/controlling foaming evolving during an industrial process.

This invention also relates to a method and an industrial process plant, using the said device for subsiding foaming.

More particularly , this invention relates to a device for subsiding /controlling the foaming to a minimum level in an industrial process without using antifoaming / defoamer agents ,thereby making the said process quite economical. Further in some industrial processes ,such as fermentation process in food and beverage industry, besides eliminating antifoaming agents, gas scrubber unit used for recovering the alcohol escaping in vapour form along with carbon dioxide gas is also eliminated as well as consumption of water and power required for fermentation plant is reduced thereby substaillny reducing the cost of fermentation.

### PRIOR ART:

Various industrial processes in which foam is formed due to gas evolution include fermentation processes of food and beverage industry, ink composition foaming process, adhesive composition foaming process, effluent or Biodegrading process evolving in Bio gas plants, secondary effluent treatment process using air sparge to keep mass in suspension evolving gases in aeration plant etc.

In all such industrial processes gases are evolved and foaming is continuously occurring which is controlled by using antifoaming agents / deofmaer such as Turkey Red oil (TRO), silicon based antifoaming agents etc. Devices for foam abatement are known from DD221 085 and JP 53106972.

The description here after is limited to fermentation process, for the sake of brevity. In fermentation process, chemical breakdown of a substance is taking place by bacteria, yeast or other micro -organisms, converting sugars to ethyl alcohol, evolving heat and carbon dioxide gas. Yeast can grow aerobically as well as anaerobically.

For growth and multification of yeast utilizable organics (sugar) and source of the Nitrogen are required and in addition optimum environmental parameter are to be maintained. During conversion of sugar to ethyl alcohol, energy is produced.

For fermentation different substances and materials those are utilized by yeast are Glucose and Fructose. some yeast can utilize sugar like Maltose, Xylsoe, Galactose and the like. For industrial application producing Ethyl alcohol raw materials containing above sugar and which are fermented by yeast are utilized. Mainly these materails are
(i) Sugar containing raw material like Sugar containing fruits, fruit juices such as Grape juice, Apple juice, honey and even some flower like Mahua, etc. major sources for such sugar are sugar cane molasses, beet sugar molasses, sugar cane juice and the like.
(ii) Starch containing raw materials like grains such as Rice, wheat Corn, Sorghum, Bajara and the like Rice bran, Root crops are like Tapioca and tubers like Potato Sweet potato and the like.
iii) Cellulose containing raw materials(As Biomass) are saw mill residue, news prints, potato peelings, rice straw, corn stoves, peanut shells, wheat straw, coca, coffen Tobaccos and the like.
For producing Ethyl alcohol sugar cane molasses which is easy to store, easy to handle, having utilizable Carbon and Nitrogen source high osmotic pressure it reduced microbiological spoilage is used in diluted form. Water is the best source for dilution but spent wash and spent lees can also be utilized.
For producing of ethyl alcohol from molasses or starch, fermentation process is carried out in a fermenter of a fermentation plant which is part of distillery. The fermentation process may be batch process or fed batch or continous fermentation process, carried out in a single fermenter, double fermenter or batteries of fermenters.
The existing fermentation process mainly comprises of following steps:
(a) Propagation of yeast in a culture vessel or battery of culture vessel.
(b) feeding of diluted sugar solution such as molasses diluted with water or spent wash or spent lees or the like diluting media preferably through a static mixer, into a fermenter;
(c)Circulation of the mass in the fermenter with help the of Circulation pump and preferably through a heat exchanger;
(d) addition of molasses, process water, process air, yeast, nutrients into the fermenter and increasing it gradually , the process air is preferably added through air sparger at the bottom of the feremtner, and Nutrient are added at regular intervals or continuous, through Nutrient dosing system;
e) maintaining the desired process parameters like specific gravity, PH (by adding Sulphuric acid) and Biocide (for controlling contamination of bacterial) and temperature of mass inside the fermenter;
f) observing the fermentation reaction, by evolution of Carbon Dioxide and foaming;
(g) starting the feeding of antifoaming agents such as Turkey Red Oil to control the foaming in fermenter, through an antifoaming dosing system;
(h)keeping carbon dioxide scrubber on line and feeding process water to the scrubber;
(i) feeding the scrubbed water with alcohol back to the fermenter or taking the same for distillation;
j) keeping the level of the mass in the fermenter benig the desired level preferably 80 %of gross volume of the fermenter, by limiting the feeding, leaving about 20 % space for foaming;
(k) transferring the fermented wash after completion of reaction, normally after 24 hours or more , to clarification section and then to distillation.
In the typical example of Ethyl alcohol manufacturing plant (Distillery) having a capacity of 30 Kiloliter per day:
(A)NORMAL INPUT:
   i) The basic sugar containing raw material used is sugarcane molasses 126 MT/Day having 40% w/w fermentable sugars at the rate of 3600 Liter per hours(LPH)
   ii) Process water used for fermenter 277 M3 per day (11500 LPH)
   iii) Process water used for Carbon Di oxide scrubber: 14.5 M3/day (600LPH)
   iv) Nutrients: 50 kg/day
   v) Process air : 200NM3/hr
   vi)Anti foaming agnet: 100 kg/day
   vii) Sulphuric acid as per requirement to control PH
   viii) Biocode: as per requirement t control contamination.
NORMAL OUTPUT:
   i) Fermented wash 361 M3/ day
   ii) CO2 generated: 22 MT
   iii) Scrubbed water with alcohol : 14.5 M3/Day

In place of sugar cane molasses, sugar beet molasses or sugar cane juice can also be used. The quantity of process water may also be reduced by recycling of weak bear or spent wash or spent lees. Further the fermenter used may be one, two, three or more, and the fermented process performed may be in batch mode or fedbatch or as a continuous process.

Further a prefermenter may be used in which suagr solution of molasses,yeast, nutrients and process air is fed and the mass from prefermenter is transfered to main fermenter/s for the final reaction, generataing CO2 and Alcohol vapur and major foaming. In this system process air may or may not be fed into the main fermenter.For non molasses fermentation also process steps are same as described herin before but generally this is carried out in batch mode.
The drawbacks, or limation or disadvantges of all the existing fermentation processes are as follows:
I)For controlling the foaming ,antifoaming/defoamer agents such as Turkey Red Oil or Silicon antifoam or the like, required to be added into the fermenter through antifoaming agent dosing device which acts only to reduce the foam and cost about Rs. 3000/-- per day which for 30 kilo liter per day capacity distillery plant.
II)These antifoaming agents are not taking any part in the fermentation reaction and are not useful for enhancing the fermentation reaction or yeast activity or to control the contamination and just added to control the foaming and depending upon the foam generation quantity added remains uncontrolled.
III)Some time heavy addition of antifoaming agents reduces the PH of fermented wash drastically thereby changing the process parameter and affecting its efficiency, retention time, sugar conversion and alcohol quality.
IV)Consumption of antifoaming agents varies with fermentation vessel or reactor volume or Height / Diameter ratio of fermenter or total input of the fermenter as well as the type of raw material and quality of the raw material.
V)Due to addition of antifoaming agents utilizble volume the fermenter is proportionately reduced.
VI)When excessive foaming occurs in the fermenter, which is not controlled by feeding the antifoaming agents, the foam enters the blow off or CO2 lines. Some times fermenter gets overflow, resulting into loss of fermented mass / alcohol and creating unhygienic condtions around the fermenter. After some time the liquid foam in the lines becomes infected which drips into fermented mass resulting into infected mass and lower yield of alcohol.
VII)The fermentation reaction is exothermic and evolves a lot of CO2 forming bubbles and foaming on the top surface of the mass in the fermenter. With the CO2, alcohol vapours are also vented out and for the recovery of the alcohol, CO2 Scrubber is used in which a part of process water is also used, this invovoves cost of the scrubber unit, steel pipe line, support frame (costing about Rs.5 lakhs for 30 Kiloteter per day distillery) as well as as cost of water used in scrubber along with the power requirement for feeding the water to scrubber.
VIII)The scrubbed water with alcohol recovery is added to the fermenter which occupy the fermenter space, increases power consumption of the mass circulating pump and reduces the concentration of alcohol in the fermented mass which results in more consumption of steam in the distillery.

### OBJECTIVE OF INVENTATION:

The main object of this invention therefore, is to obviate the above said shortcomings, limitations or disadvantages of the existing fermentation process as well as all the foam evolving industrial process and to provide a device for subsiding foaming evolving in an Industrial process without using an antifoam/ defoaming agent.
A further object of this invention is to be provide a device for subsiding foaming evolving in an Industrial process in which CO2 Scrubber required in a fermentation plant is eliminated, along with its, support frame structure and pipe lines for feeding process water and collecting scrubbed water having alcohol and Carbondioxide with alcohol vapour carrying lines.
A further oject of this invention is to provide a device for subsiding foaming evolving in an industrial process in which process water consumption is reduced portionate to the water fed to the C02 scrubber in the existing fermentation process.
A further object of this invention is to provide a device for subsiding foaming evolving in an industrial process in which power consumption is reduced propionate to the power required for running the pump for feeding processes water to the CO2 scrubber and collecting scrubbed water along with alcohol, and also power of circuiting pump used for circulating excess mass due to addition of scrubbed water with alcohol.
A further object of this invention is to provide a device for susding foaming evoving in an indrusrial process in which steam consumption in distillery is reduced, propotionate to the dilution of alcohol in the fermented mass due to additon of scuruubed water with alcohol in the fermented mass.
A further object of this invention is to provide a device for subsiding foaming evolving in an industrial process in which any chance of foam oozing out of fermenter or entering into any vent pipe is totally avoided thereby maintain hygienic condition around fermenter and no chance of any contamination of fermented mass, there by improving alcohol quality.

A further object of this invention is to provide a device for subsiding foaming evolving in an industrial process in which foam is totally subsided there by increasing the utilizable space in the fermenter giving higher efficiency at lower cost.

A further object of this invention is to provide a device for subsiding foaming evolving in an industrial process in which the device is adjustable to accommodate different levels of fermented mass in the fermenter to optimize the fermentation process.

A further object of this invention is to provide a device for subsiding foaming evolving in an industrial process in which the normal process water and air are utilized without affecting any process parameters, thereby maintaining higher efficiency with reduced process time resulting into higher yield.

A further object of this invention is to provide a device for subsided foaming evolving in an industrial process, which is quite simple to manufacture, easy to use and adjustable to suit any size of fermenter or reactor.

### STATEMENT OF INVENTATION:

This invention provides a device according to claim 1 for subsiding foaming evolving in an industrial I process without using antifoaming agent / defoamer, comprising of a plurality of concentric ring pipes connected to the process water line at the end and being mounted at the top inside surface of the vessel in which foaming occurs during the industrial process, each of the said ring pipes being provided with a plurality of holes and each of said ring pipe connected to the process water pipe or the like fluid source.
Wherein the holes provided in the said arms are in bunches, one hole of the bunch being vertically downwards and others inclined.
Wherein an extension piece/ pipe is provided for adjusting the position of the device inside the fermenter/reactor or foam evolving vessel.
This invention also provides a method of subsiding / controlling foaming, evolving in an industrial process, without using antifoaming agents comprising forming of water jets or water and spent wash / lees jet or air and water jets or air, water or spent wash/lees jets, by using the device of this invention and directing the said jets on the foaming evolving in the industrial process.
This invention also provides an indrusrial process plant such as fermentation plant, distillery, Biogas plant, effluent treatment plant, ink or adhesive composition producing plant, aeration plant or the like, incorporated with the device of this invention, for subsiding/ controlling foaming evolving in the industrial process, without using antifoaming agent /defoamer.

### BRIEF DESRIPTION DRAWINGS OF INVENTION

The invention will be clear from the following description with reference to accompanying drawing wherein:

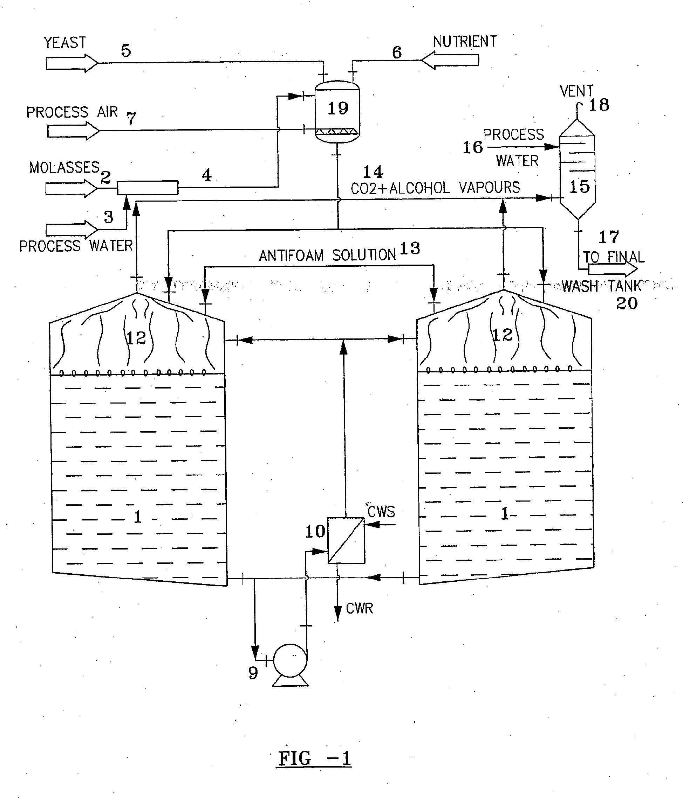

FIG. 1: shows schematic diagram of a fermentation plant, used for carrying out fermentation process, according to the prior art.
FIG: 2 shows schematic diagram of another fermentation plant, used for fermentation process according to prior art.
FIG: 3 shows schematic diagram of a fermentation plant, used for carrying out fermentation process, according to an embodiment of this invention.
FIG:4: shows schematic diagram of the fermentation plant, used for carrying out the fermentation process, according to another embodiment of this invention.
FIG :5: shows partial elevation of the device for subsiding foaming evolving in an industrial process , according to an embodiment of this invention.
FIG 6: shows top plan seen along line, V-V marked in FIG5
FIG 7: shows bottom plan seen along line, Y-Y marked in FIG 5
FIG 8 and 9 : Show details of the arm and arms layout plan of the device shown in FIG 5
FIG 10 shows elevation of an extension piece, for the device shown in FIG 5
FIG 11, shows bottom plan view of header seen along the line Y-Y marked in fig 5 as an alternative Fig .7
FIG 12 : show plan of the concentric ring pipes of the device according to further embodiment of the invention.
FIG 13: show plan of the spiral ring pipes of the device according to further embodiment of the invention.

### DETAILED DESCRPTION OF DRAWING

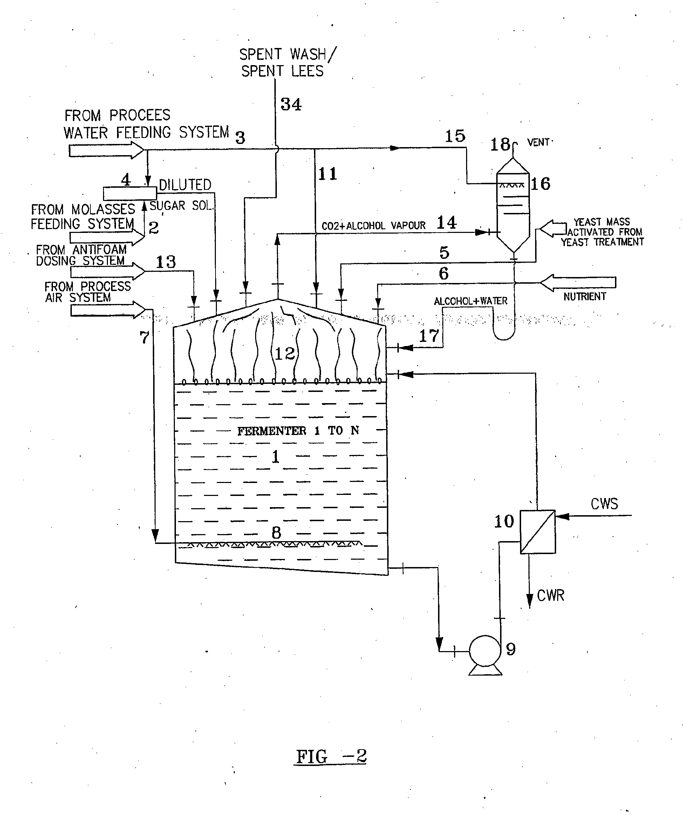

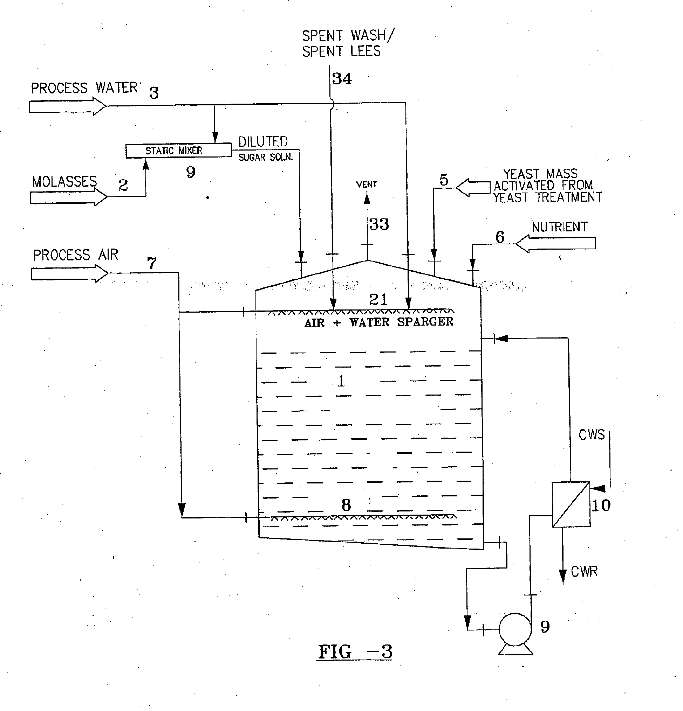

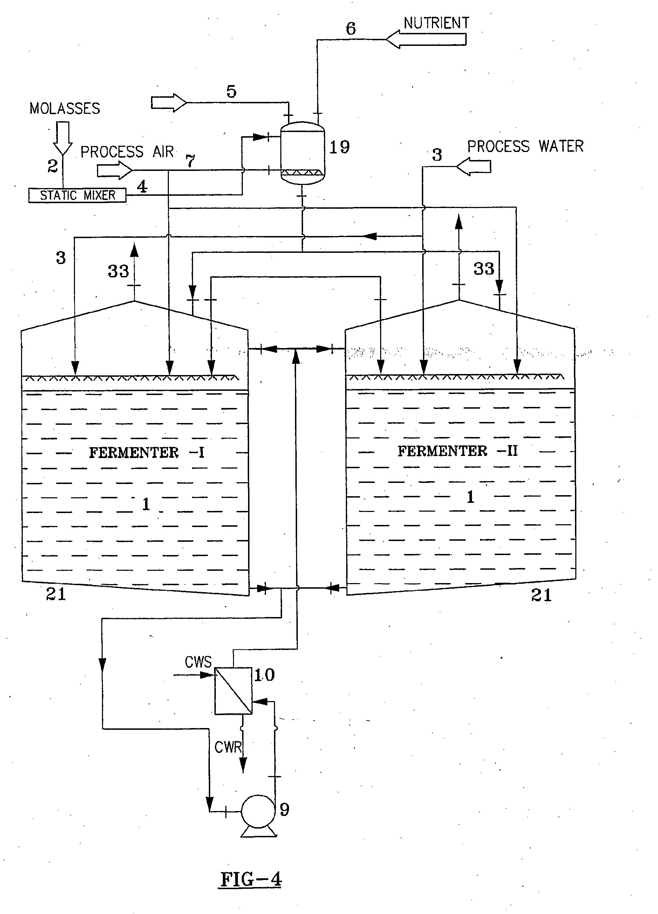

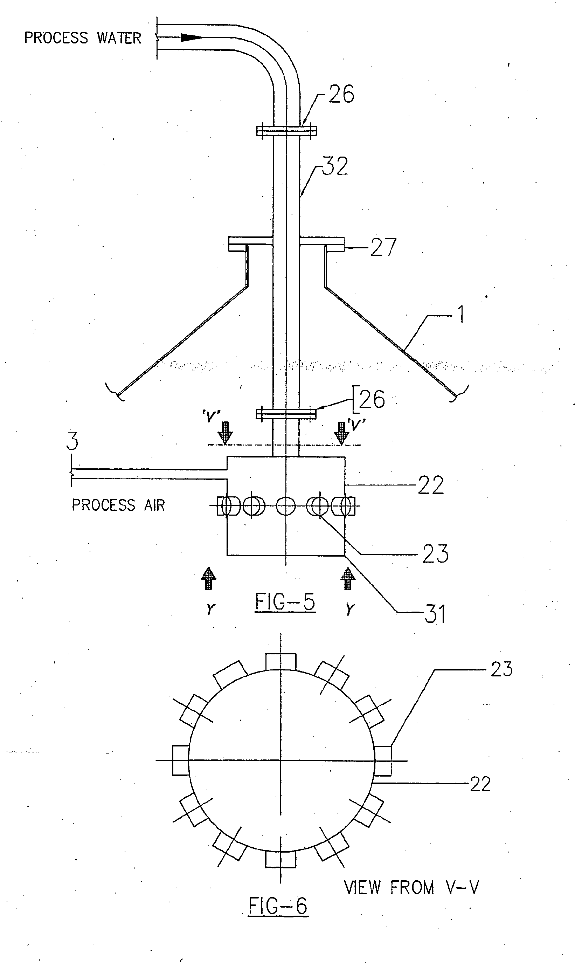

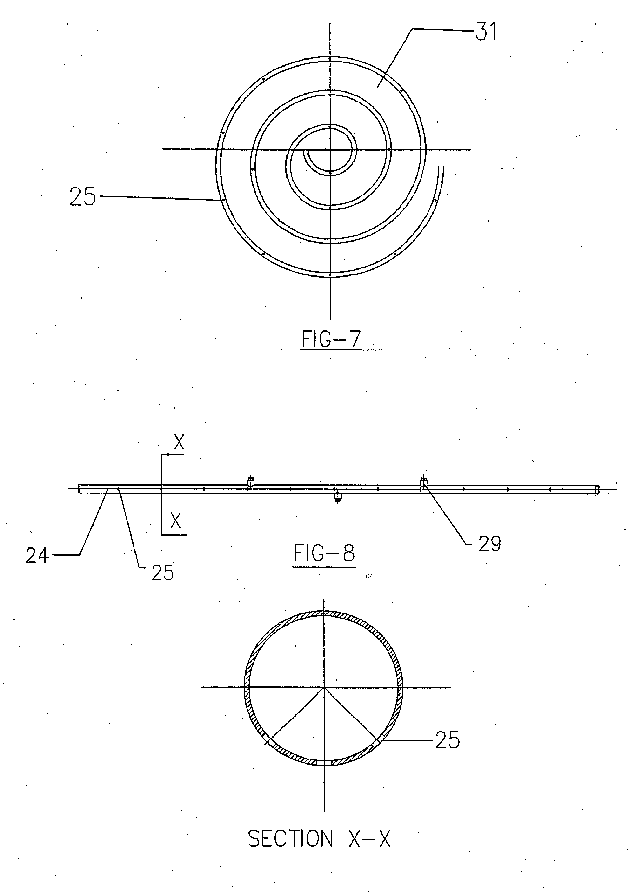

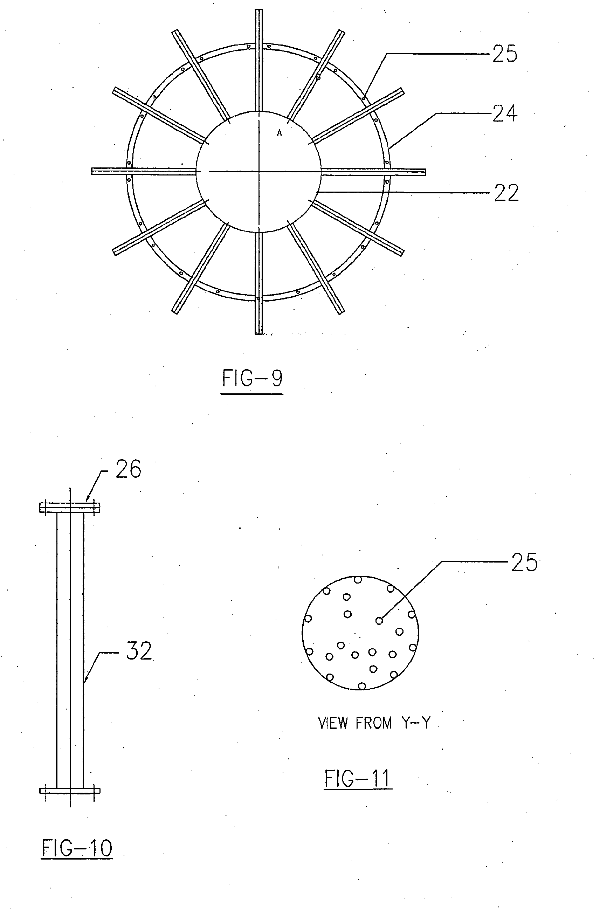

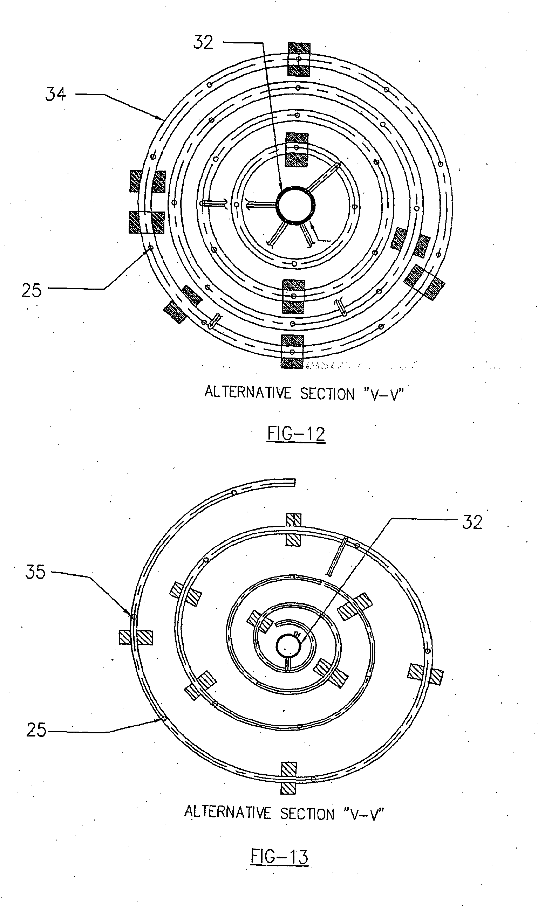

Now referring to FIGS 1 and 2, the fermentation plant, used for carrying out fermentation process, known in the prior art, mainly comprises at least one fermenter or reactor(1). However there may be a battery of fermenters containing two, three, four or even more fermenter in a series.Molasses(2),a sugar based raw material, diluted with water(3) and or with any other diluent such as spent wash or spent lees, preferably by using a static mixer(4) is fed into the fermenter(1). In place of molasses, sugarcane juice or other sugar based raw materials can also be used. Activated yeast mass (5) and Nutrients (6) are also fed into the fermenter for activating the reaction. Process air (7) is also preferable fed through air sparger(8) at the bottom of the fermenter(1). The fermenter mass is circulated with the help of circulation pump(9) which is also preferably cooled in a heat exchanger/ fermented wash cooler (10).
Fermentation process being an exothermal reaction CO2(11) is generated which comes out in the form of bubbles and foaming(12)evolves at the upper portion of the fermenter. To control foaming antifoaming agents (13) such as Turkey Red Oil or Silicon Antifoaming are added with the help of antifoaming metering device. CO2 also invloves alcohol in vapor form and to prevent the loss of alcohol, the CO2 along with alcohol vapours(14) is taken to a CO2 scrubber(15) in which process water (16) is fed.to disolve and recover thewhich is fed back to fermenter(1) along with scrubbed) water(17) and CO2 is vented out through the vent(18).When foam forming incerese ,more quanitity of anttfoaming agents is fed to the fermenter which not only increases the cost but also affects the efficiency , process parameters like PH. Sometimes foam enters CO2 line causing development of bacteria which falls into the fermenter mass creating contamination resulting into poor quality of alcohol. Biocides are required to be added to control Bacterial which also increases the cost. Due to continuous addition of antifoaming agents as well as scrubbed water, more and more space of fermenter is occupied by non active materials resulting into high pressure inside the fermenter and reducing the capacity of fermenter. Sometimes the foaming oozes out of the fermenter creating unhygienic conditions around the fermenter.
FIG 2 shows the use of two fermenters ar connected in series and the same circulation pump(9) and heat exchanger (10) being used for circulation of mass in both the fermenters. A prefermenter(19) is used in which diluted molasses, yeast and nutrients are fed, process air is sparged and the prefermented mass is transferred to the one or both fermenters (1) for the final reaction. CO2 along with alcohol vapours from both the fermenter is fed to CO2 scrubber(15) where process water(16) is sparged to disolve the alcohol and the scrubbed water with alcohol (17) is sent to wash tank(20). Antifoaming agent (13) is fed to both the fermenter, as per requirement. For a 30 Kilo liter per day distllery it is observed that the antifoaming agents costing about Rs. 3000/- per day are required and water for scrubber required is 600 LPH.
Now referring to FIGs 3 to 13 the device(21) for subsiding foaming (12) evolving during an industrial process such as fermentation process without using any antifoaming agent is an air and water sparge producing device provided at the top portion, inside the fermenter (1) or each of the fermenters or reactors. A device (21) not according to this invention mainly comprises a header (22) provided with a pluarity of sockets (23) around its periphery for supporting a plurality of radial arms(24) formed of thin pipes of the length selected according to the inner diameter of the fermenter. Each of the arm is connected to respected sockets at one end preferably by threading or by any other joining means. Each of the arm (24) is provided with a plurality of holes or bunch of holes (25) in spaced apart manner distributed along its length. Each bunch of holes(25) preferably consist of three holes , one in vertical downward direction and two inclined at an angel of 30 to 60 , more preferably 45 form the vertical. The header (22) is connected to a process water(3) supply line preferably by using suitable extension pipe (32) and flanges(26) and supported at the top end (27) of the fermenter(1). The header (22) is also connected with process air supply line(7). For a non limiting typical example each arm (24) is of 40mm. diameter, holes (25) are of 2mm diameter and pitch of the holes (25) is 250mm.
In case of a larger fermenter the radial arms (24) are interconnected with peripheral arms (28) with the help of sockets (29) fixed to radial arms (24)
At the bottom closed end (30) of the header (22), in a device not according to this invention, a spiral sparged pipe (31), having holes (25) is provided, which is connected to the header (22) for receiving process water and air.
Alternatively the closed end (30) of header(22) is provided with a plurality of holes (25).
According to this invention a device for subsiding foaming evolving in an industrial processes without using antifoaming agent/defoamer, comprises a plurality of concentric ring pipes(34) connected to the process water line at the end and being mounted at the top inside surface of the vessel in which foaming occurs during the industrial process, each of the sad ring pipes being provided with a plurality of holes(25) and each of said ring pipe connected to the process water pipe or the like fluid source. As shown in FIG no. 12.
Another embodiment not according to this invention is a device for subsiding foaming evolving in an industrial process without using antifoaming agent/ defoamer, comprises a spiral ring pipe(25) provided with plurality of holes(25) at tis lower surface and connected to the process water line at the end, and being mounted at the top inside surface of the vessel in which foaming occurs during the industrial process, the said spiral ring being connected at the free end to process water pipe or like fluid source ,as shown in FIG no 13.
An extension pipe / piece (32) with flange (26) is provided for adjusting the position of the device (21) inside the fermenter (1) as per requirement.
In some processes where foaming is occurring vigorously the header (22) is provided in two or more vertical planes one above another, keeping the sockets and radial arms staggered so that radial arms of one set do not cover the radial arms of the set below it, but will cover the space left out in between the two adjacent radial arms of the set just below it, thereby air and water jets produced cover the whole space at the top surface of the fermenter for instantly subsiding foaming.
The device (21) is placed at the inside top surface of the fermenter, supported at the top inlet of it. The device (21) is connected to process water (3) and air (7) lines and as soon as CO2 and foaming evolves air and water in the form of jets start spraying through holes (25) which covers the whole space and subsides the foaming completely.
In addition to process water (3) spent wash or spent lees (34) may also to be feed to the device (21). The alcohol vapour formed with CO2 also comes in contact with the water sprayed by the device (21) and is dissolved in water and remain in the fermenter, leaving only CO2 to be vented out through the vent(33).As there is no need of CO2 scrubber which is now eliminated along with its pipe lines and support frame. Water supply to CO2 scrubber is not require therefore saving of water consumption and power consumption used in feeding the water to scrubber.

### ADVANTAGES OF THE INVENTION

There is no need of any antifoaming agent as the foaming is completely subsided / control led by the device and therefore saving on the cost of antifoaming agent as well as antifoaming metering / feeding system, connecting piping and piping support. There is no element, like antifoaming agent, which does not take part in the reaction/fermentation process, being added to the fermenter hence the process parameters are not affected and efficiency is enhanced. Space that is occupied by the antifoaming agent and scrubbed water is utilized for feeding more sugar solution; thereby utilizable space of the fermenter is increased therefore productivity is more. The same process water /spent wash / spent lees and the process air which is required to be continuously fed to the fermenter is now utilized in the device for creating air and water sparge/jet for controlling / subsiding the foaming and now there is no antifoaming agent, and scrubbed water, therefore for the same capacity mass circulation re circulated by the pump is reduced thereby saving of the power used for circulation pump. As there is no extra mass, there is no rise in pressure inside the fermenter. Foaming is subsided instantly hence no chance of any foaming entering into vent or oozing out of the fermenter and hence hygienic conditions are maintained around the fermenter as well as no chance of any Bacteria developing in the vent and dripping back into the fermenter, contaminating the fermented mass hence the cost of Biocide is saved and high quality and higher yield of alcohol / fermenrted mass is achieved. Also process parameter like PH is not affected, as there is no antifoaming
agent there for. Further the scrubbed water with alcohol not added to the mass hence the concentration of alcohol in the fermented mass is comparatively more which reduces steam consumption in the distillation thereby proportionately reducing the power consumption. With the use of the device (21) for subsiding foaming which does not require antifoaming agent, process parameters are maintained and reaction time is reduced conversion efficiency is increased, alcohol recovery per unit of sugar input is increased, yeast activity is maintained and overall fermentation efficiency is increased as well as load on effluent treatment plant is reduced.
Though the above description is given for fermentation process, device (21) of this invention is equally effective for controlling the / subsiding foaming evolving in any industrial process.
The above description with reference to figure of the drawing is given to understand the invention rather than limit its scope.

## Claims

1. A device for subsiding foaming evolving in an industrial process without using antifoaming agent, comprising a fermenter or reactor and
a plurality of concentric ring pipes (34) being mounted at a top inside surface of the fermenter or reactor (1) in which foaming occurs during the industrial prowess,
wherein each of the said ring pipes (34) being provided with a plurality of holes (25);
**characterized in that**
each of said ring pipes (34) is connected to a process fluid supply line (3; 7; 34) for generating fluid jets through the holes (25) provided in said ring pipes (34) for subsiding the foaming occurring during the industrial process, and
wherein the holes provided in the ring pipe are arranged in bunches,
wherein one hole of the bunch of holes (25) is vertical downwards and the others inclined.

2. The device according to claim 1, wherein said process fluid source supply line is at least one of a process water supply line (3), a process air supply line (7) and a process spent wash/spent lees supply line (34).

3. The device according to claim 1, wherein the holes (25) provided in the said arms (24) or ring pipes (34, 35) are in bunches, one hole of the bunch being vertically downward and other inclined.

4. The device according to claim 1, wherein an extension pipe (32) is provided for adjusting the position of the device inside the fermenter or reactor (1).

5. An industrial process plant such as fermentation plant, distillery, Biogas plant, effluent treatment plant ink or adhesive composition producing plant, aeration plant or the like, comprising a device according to any one of claims 1 to 4 for subsiding foaming evolving in the industrial process, without using antifoaming agent.

6. A method of subsiding foaming, evolving in an industrial process, without using antifoaming agent comprising a step of forming a fluid jet from a process fluid source, by using the device as claimed in any of the claims 1 to 4.

## Patentansprüche

1. Vorrichtung zum Reduzieren von Aufschäumen, das in einem industriellen Prozess ohne Verwendung eines Antischaummittels entsteht, die umfasst: einen Fermentationskessel oder Reaktor und
eine Vielzahl von konzentrischen Ringrohren (34), die an einer oberen Innenoberfläche des Fermentationskessels oder Reaktors (1), in dem Aufschäumen während des industriellen Prozesses stattfindet, angebracht sind
wobei jedes der Ringrohre (34) mit einer Vielzahl Löcher (25) bereitgestellt ist;
**dadurch gekennzeichnet, dass**
jedes der Ringrohre (34) mit einer Prozessflüssigkeitsversorgungsleitung (3; 7; 34) zum Erzeugen von Flüssigkeitsstrahlen durch die Löcher (25), die in den Ringrohren (34) bereitgestellt sind, verbunden ist, zum Reduzieren des Aufschäumens, das während des industriellen Prozesses stattfindet, und
wobei die Löcher, die in dem Ringrohr (34) bereitgestellt sind, in Gruppen angeordnet sind,
wobei ein Loch der Gruppe von Löchern (25) vertikal nach unten liegt und die anderen geneigt liegen.

2. Vorrichtung nach Anspruch 1, wobei die Prozessflüssigkeitsquellenversorgungsleitung mindestens eines von einer Prozesswasserversorgungsleitung (3), einer Prozessluftversorgungsleitung (7) und einer Prozessleitung (34) für verbrauchte Abspülung/verbrauchten Bodensatz ist.

3. Vorrichtung gemäß Anspruch 1, wobei die Löcher (25), die in den Armen (24) oder Ringrohren (34, 35) bereitgestellt sind, in Gruppen angeordnet sind, wobei ein Loch der Gruppe vertikal nach unten liegt und die anderen geneigt liegen.

4. Vorrichtung gemäß Anspruch 1, wobei ein Verlängerungsrohr (32) bereitgestellt ist, um die Position der Vorrichtung innerhalb des Fermentationskessels oder Reaktors (1) anzupassen.

5. Anlage für einen industriellen Prozess, so wie z.B. eine Fermentationsanlage, Destillerie, Biogasanlage, Abwasserbehandlungsanlage, Herstellungsanlage für Tinte oder Klebstoff, Belüftungsanlage oder entsprechendes, die eine Vorrichtung gemäß einem der Ansprüche 1 bis 4 zum Reduzieren von Aufschäumen, das in dem industriellen Prozess entsteht, ohne Verwendung von Antischaummittel umfasst.

6. Verfahren zum Reduzieren von Aufschäumen, das in einem industriellen Prozess entsteht, ohne Verwendung von Antischaummittel, welches einen Schritt des Ausbildens eines Flüssigkeitsstrahls aus einer Prozessflüssigkeitsquelle unter Verwendung der Vorrichtung, wie sie in einem der Ansprüche 1-4 beansprucht ist, umfasst.

## Revendications

1. Dispositif pour réduire un moussage se développant au cours d'un processus industriel sans l'utilisation d'un agent antimousse, comprenant un fermenteur ou réacteur et une pluralité de tuyaux annulaires concentriques (34) montés sur une surface intérieure supérieure du fermenteur ou réacteur (1) dans lequel le moussage se produit lors du processus industriel,
dans lequel chacun des tuyaux annulaires (34) est pourvu d'une pluralité de trous (25);
**caractérisé en ce que**
chacun desdits tuyaux annulaires (34) est connecté à une conduite d'alimentation en fluide de processus (3; 7; 34) pour générer des jets de fluide à travers les trous (25) prévus dans lesdits tuyaux annulaires (34) pour réduire le moussage se produisant lors du processus industriel, et
dans lequel les trous prévus dans le tuyau annulaire sont arrangés en groupes;
dans lequel un trou du groupe de trous (25) est disposé verticalement vers le bas et les autres sont inclinés.

2. Dispositif selon la revendication 1, dans lequel ladite conduite d'alimentation d'une source de fluide de processus est au moins une parmi une conduite d'alimentation d'eau de processus (3), une conduite d'alimentation d'air de processus (7) et une conduite d'alimentation de sillage usagé/lies usagées lors du processus (34).

3. Dispositif selon la revendication 1, dans lequel les trous (25) prévus dans lesdits bras (24) ou tuyaux annulaires (34, 35) sont disposés en groupes, un trou du groupe étant disposé verticalement vers le bas et les autres étant inclinés.

4. Dispositif selon la revendication 1, dans lequel une conduite d'extension (32) est prévue pour ajuster la position du dispositif à l'intérieur du fermenteur ou réacteur (1).

5. Installation de processus industriel tel qu'une installation de fermentation, une distillerie, une installation de biogaz, une installation de traitement d'effluents, une installation de production d'encre ou d'une composition adhésive, une installation d'aération ou similaire, comprenant un dispositif selon l'une des revendications 1 à 4 pour réduire le moussage se développant au cours du processus industriel sans utilisation d'un agent antimousse.

6. Procédé de réduction du moussage se développant au cours d'un processus industriel sans utiliser un agent antimousse, comprenant une étape de former un jet de fluide à partir d'une source de fluide de processus en utilisant le dispositif selon l'une quelconque des revendications 1 à 4.
